# EUROPÄISCHE PATENTANMELDUNG

(11) **EP 4 513 331 A1**
(43) Veröffentlichungstag der Anmeldung: **26.02.2025**
(21) Anmeldenummer: 23193389.6
(22) Anmeldetag: 25.08.2023
(51) Int. Cl.: G06F 9/50

(54) **COMPUTER-IMPLEMENTIERTES VERFAHREN UND SYSTEM ZUR AUFGABEN-VERTEILUNG IN EINEM SYSTEM**

(71) Anmelder: Siemens Aktiengesellschaft, 80333 München (DE)
(72) Erfinder: SCHALL, Daniel, 2020 Hollabrunn (AT)
(74) Vertreter: Siemens Patent Attorneys

(57) **Zusammenfassung**

Computer-Implementiertes Verfahren zur Aufgaben-Verteilung in einem System, umfassend einen Server, ein erstes verbundenes Edge-Gerät und zumindest ein zweites verbundenes Edge-Gerät, wobei folgende Schritte ausgeführt werden:
a) Bereitstellen und Zuordnen zumindest einer ersten Aufgabe zu einer ersten Aufgaben-Warteliste des ersten Edge-Geräts,
b) Bereitstellen und Zuordnen zumindest einer zweiten Aufgabe zu einer jeweiligen zweiten Aufgaben-Warteliste des zumindest einen zweiten Edge-Geräts,
c) Ermitteln der aktuellen ersten Verarbeitungskapazität des ersten Edge-Geräts und Erstellen einer Verarbeitungs-Prognose für die Aufgaben in der ersten Aufgaben-Warteliste auf Basis der aktuellen ersten Verarbeitungskapazität unter Verwendung eines Auto-Encoders, und jeweiliger erster Aufgaben-Parameter,
d) Prüfen, durch das erste Edge-Gerät, ob die erste Verarbeitungs-Prognose innerhalb eines vorgegebenen Wertebereichs für die Verarbeitung durch das erste Edge-Gerät liegt, und, wenn ja, Prüfen anhand des jeweiligen zweiten Aufgaben-Parameters, ob eine Aufgabe aus der jeweiligen zweiten Aufgaben-Warteliste an das erste Edge-Gerät übertragbar ist, und wenn ja, Übertragen einer Aufgabe aus der jeweiligen zweiten Aufgaben-Warteliste an die erste Aufgaben-Warteliste.

## Beschreibung

*Unabhängig vom grammatikalischen Geschlecht eines bestimmten Begriffes sind Personen mit männlicher, weiblicher oder anderer Geschlechteridentität mit umfasst.*

Die Erfindung betrifft ein computer-Implementiertes Verfahren und ein System zur Aufgaben-Verteilung in einem System, umfassend einen Server, ein erstes verbundenes Edge-Gerät und zumindest ein zweites verbundenes Edge-Gerät.

Die Erfindung betrifft ferner ein Computer-Programm-Produkt.

Edge-Geräte eines Klienten-Server-Systems werden häufig in einem Fertigungskontext verwendet, um Daten zu sammeln und Datenanalyse- und "machine learning" (kurz "ML")-Aufgaben durchzuführen.

Edge-Geräte bieten eine große Flexibilität, womit bei Bedarf zusätzliche Anwendungsprogramme (kurz "Apps") installiert werden können. Dadurch kann jedoch die Hardwareauslastung verschiedener Geräte je nach den aktuell auf dem System ausgeführten Apps und ML/KI-Aufgaben variieren.

Der CPU- und Speicherverbrauch von Edge-Geräten kann sich demnach während dem Zeitverlauf ändern und sich die Geräteauslastung dementsprechend verhalten.

Für Edge-Computing- und IoT-Systeme im Stand der Technik ist keine automatische Möglichkeit vorgesehen, die Workloads zu verwalten und neu auszugleichen, sodass Edge-Geräte gleichmäßiger über verschiedene Gerätecluster hinweg genutzt werden.

Wenn das sogenannte "rebalancing" nur dann erfolgt, wenn ein Gerät überlastet ist, kann es bereits zu spät sein, um Workloads zu verschieben und die Arbeitslast zu reduzieren.

Beispielsweise ist das Gerät möglicherweise nicht in der Lage, benötigte Daten oder Modelle auf ein anderes Gerät zu übertragen, das möglicherweise Workloads übernehmen kann.

Workloads sind Rechenprozesse, um eine Aufgabe zu erfüllen. Workloads können unterschiedlich groß sein und unterschiedlichen Zwecken dienen: Bei einigen handelt es sich um kleinere Prozesse, bei anderen um größere Batch-Prozesse wie das Trainieren eines KI-Modells.

Statische Workloads bleiben über einen langen Zeitraum relativ konstant und verbrauchen sehr ähnliche Mengen an Rechenressourcen nach einem konstanten Zeitplan. Das Edge-Gerät kann entsprechend der zu erwartenden statischen Auslastung ausgewählt werden, wobei eine Neukonfiguration des Systems zur Laufzeit nicht erforderlich ist.

Dynamische Workloads hingegen können sich jedoch drastisch anpassen, wenn die Anforderungen steigen. Sie werden auch als temporäre Workloads bezeichnet. Eine dynamische Workload erfordert mehr Flexibilität und Verfügbarkeit, um effizient ausgeführt zu werden. Ein Beispiel für eine dynamische Workload ist das erneute Trainieren eines KI-Modells am Edge. Möglicherweise sind neue Daten verfügbar, die eine Aktualisierung des Modells erfordern. Diese Aufgaben sind bei der Auslegung eines Systems schwer oder gar nicht planbar. Möglicherweise wünscht sich der Benutzer auch mehr Flexibilität, um bestimmte Workloads von einer Cloud-Platform an ein Edge-Gerät zu verlagern.

Cloud-Anbieter bieten Mechanismen für die automatische Skalierung (sogenanntes "elastic computing"), um Rechen-Spitzen (sogenannte "bursts") und temporäre Workloads zu verwalten. In Cloud-Umgebungen ist es meist einfach, einem bestimmten Computing-Cluster zusätzliche Computing-Ressourcen wie virtuelle Maschinen hinzuzufügen. Dieses Muster wird als horizontale Skalierung bezeichnet.

In aktuellen Edge-Systemen ist in der Regel nur eine vertikale Skalierung möglich, indem die Edge-Hardware aktualisiert wird, wenn ein höherer Rechenbedarf entsteht. Jedoch besteht ein Nachteil darin, dass ein höherer Rechenbedarf möglicherweise nur für einen sehr kurzen Zeitraum besteht, was die zusätzliche Komplexität der Edge-Geräte nicht rechtfertigt.

Es ist daher Aufgabe der Erfindung ein effizientes Verfahren zur dynamischen Lastverteilung von Aufgaben über mehrere Edge-Vorrichtungen bereitzustellen.

Die erfindungsgemäße Aufgabe wird durch ein Verfahren eingangs genannter Art gelöst, folgende Schritte ausgeführt werden:
a) Bereitstellen und Zuordnen zumindest einer ersten Aufgabe zu einer ersten Aufgaben-Warteliste des ersten Edge-Geräts, wobei die zumindest eine erste Aufgabe jeweilige erste Aufgaben-Parameter umfasst, welche deren Verarbeitung durch ein Edge-Gerät beschreiben,
b) Bereitstellen und Zuordnen zumindest einer zweiten Aufgabe zu einer jeweiligen zweiten Aufgaben-Warteliste des zumindest einen zweiten Edge-Geräts, wobei die zumindest eine zweite Aufgabe jeweilige zweite Aufgaben-Parameter umfasst, welche deren Verarbeitung durch ein Edge-Gerät beschreiben,
c) Ermitteln der aktuellen ersten Verarbeitungskapazität des ersten Edge-Geräts, durch das erste Edge-Gerät, und Erstellen einer Verarbeitungs-Prognose für die Aufgaben in der ersten Aufgaben-Warteliste auf Basis der aktuellen ersten Verarbeitungskapazität unter Verwendung eines Auto-Encoders, und jeweiliger erster Aufgaben-Parameter, durch das erste Edge-Gerät,
d) Prüfen, durch das erste Edge-Gerät, ob die erste Verarbeitungs-Prognose innerhalb eines vorgegebenen Wertebereichs für die Verarbeitung durch das erste Edge-Gerät liegt, und, wenn ja,
   Prüfen, durch das erste Edge-Gerät, anhand des jeweiligen zweiten Aufgaben-Parameters, ob eine Aufgabe aus der jeweiligen zweiten Aufgaben-Warteliste an das erste Edge-Gerät übertragbar ist, und wenn ja,
   Übertragen einer Aufgabe aus der jeweiligen zweiten Aufgaben-Warteliste an die erste Aufgaben-Warteliste, vorzugsweise durch das erste Edge-Gerät.

Dadurch wird erreicht, dass Egde-Geräte, auch als Klienten in einem Klienten-Server-System bezeichnet, dynamisch untereinander Aufgaben von anderen Edge-Geräten übernommen werden, um eine effiziente Lastverteilung dynamisch über die Edge-Geräte zu erhalten.

Der Server kann beispielsweise in einem ersten Schritt Aufgaben an die einzelnen Edge-Geräte zuweisen, jedoch ohne eine sich ändernde aktuelle Verfügbarkeit zu berücksichtigen.

Die Übertragung der Aufgaben zwischen Edge-Geräten erfolgt dezentral, also ohne Einbeziehung des Servers.

Der erfindungsgemäße Ansatz eignet sich beispielsweise für parallele Rechnenaufgaben im Sinne einer Planungsstrategie für Computerprogramme mit mehreren Threads. Es löst das Problem der Ausführung einer dynamischen Multithread-Berechnung, die neue Ausführungsthreads auf einem statischen Multithread-Computer mit einer festen Anzahl von Prozessoren (oder Kernen) "erzeugen" kann.

In einem Scheduler zum "Stehlen von Arbeit" verfügt jeder Prozessor in einem Computersystem über eine Warteschlange von Arbeitsaufgaben (Rechenaufgaben, Threads), die ausgeführt werden müssen. Jede Arbeitsaufgabe besteht aus einer Reihe von Anweisungen, die nacheinander ausgeführt werden müssen, aber während ihrer Ausführung kann eine Arbeitsaufgabe auch neue Arbeitsaufgaben erzeugen, die möglicherweise parallel zu ihrer anderen Arbeit ausgeführt werden können. Diese neuen Elemente werden zunächst in die Warteschlange des Prozessors gestellt, der die Arbeitsaufgabe ausführt. Wenn einem Prozessor die Arbeit ausgeht, sieht er sich die Warteschlangen der anderen Prozessoren an und "stiehlt" deren Arbeitsaufgaben. In der Tat verteilt das Stehlen von Arbeit die Planungsarbeit auf Prozessoren im Leerlauf, und wenn alle Prozessoren Arbeit zu erledigen haben, entsteht kein Planungsaufwand.

Jedoch können nicht immer alle Aufgaben von einem Edge-Gerät an ein anderes delegiert werden, beispielsweise wenn lokale Ressourcen des Edge-Geräts bei der Ausführung der jeweiligen Aufgabe verwendet werden müssen, wobei diese Kompatibilitäts-Eigenschaft im jeweiligen Aufgaben-Parameter vermerkt und gespeichert ist.

Ein Autoencoder ist ein künstliches neuronales Netz, das dazu genutzt wird, effiziente Codierungen zu lernen. Das Ziel eines Autoencoders ist es, eine komprimierte Repräsentation ("encoding") für einen Satz Daten zu lernen und somit auch wesentliche Merkmale zu extrahieren. Dadurch kann er zur Dimensionsreduktion genutzt werden.

Der Autoencoder benutzt drei oder mehr Schichten:
- Eine Eingabeschicht. Bei der Gesichtserkennung könnten die Neuronen beispielsweise die Pixel einer Fotografie abbilden.
- Einige signifikant kleinere Schichten, die das Encoding bilden.
- Eine Ausgabeschicht, in der jedes Neuron die gleiche Bedeutung hat wie das entsprechende in der Eingabeschicht. Wenn lineare Neuronen benutzt werden, ist der Autoencoder der Hauptkomponentenanalyse sehr ähnlich.

In einer Weiterbildung der Erfindung ist es vorgesehen, dass ferner folgender Schritt ausgeführt wird:
e) Verarbeiten der ersten Aufgaben-Warteliste durch das erste Edge-Gerät.

Dadurch wird erreicht, dass das erste Edge-Geräte die Effizienz der zur Verfügung stehenden Ressourcen verbessert wird.

In einer Weiterbildung der Erfindung ist es vorgesehen, dass das Bereitstellen im Schritt a) der zumindest einen ersten Aufgabe an das erste Edge-Gerät und das Bereitstellen im Schritt b) der zumindest einen zweiten Aufgabe an das das zumindest eine zweite Edge-Gerät durch den Server erfolgt.

Durch eine Verteilung von Aufgaben durch einen Server wird auf eine einfache Weise eine vorläufige Aufgaben-Verteilung über die Edge-Geräte erreicht, welche beispielsweise eine statische Verarbeitungskapazität der verbundenen Edge-Geräte berücksichtigen kann, oder auch eine dynamische aktuelle Verarbeitungskapazität der verbundenen Edge-Geräte.

In einer Weiterbildung der Erfindung ist es vorgesehen, dass der erste Aufgaben-Parameter und/oder der jeweilige zweite Aufgaben-Parameter Übertragungs-Informationen darüber enthält, ob eine Aufgabe von einem Edge-Gerät auf ein anderes Edge-Gerät übertragen werden kann, insbesondere wenn an das jeweilige Edge-Gerät verbundene technische Vorrichtungen eingebunden werden müssen und/oder Daten unter verschiedenen Edge-Geräten übertragen werden müssen.

Dadurch wird erreicht, dass nur kompatible Aufgaben an andere Edge-Geräte übertragen werden, wozu Übertragungs-Informationen verwendet werden, welche den entsprechenden Aufgaben-Parametern bereitgestellt werden und von der Aufgabe selbst definiert werden.

Die Übertragungs-Informationen beschreiben Eigenschaften von Aufgaben, ob die Verarbeitung einer jeweiligen Aufgabe an ein jeweiliges/spezielles Edge-Gerät verknüpft ist.

Die Verknüpfung kann beispielsweise auf lokale Erfordernisse, wie eine lokale Sensor-Parameter-Erfassung oder eine lokale Daten-Speicherung beruhen.

Ebenso können die Übertragungs-Informationen beispielsweise kennzeichnen, ob Daten an weitere Edge-Vorrichtungen verteilt werden sollen, oder vom Server abgerufen werden sollen, oder entsprechende Zugriffsrechte zu berücksichtigen sind.

In einer Weiterbildung der Erfindung ist es vorgesehen, dass der erste Aufgaben-Parameter und/oder der jeweilige zweite Aufgaben-Parameter Leistungs-Informationen über die Verarbeitung einer Aufgabe von einem Edge-Gerät enthält, insbesondere Prozessor-Informationen und/oder Speicher-Informationen und/oder Netzwerk-Informationen über das Netzwerk zwischen Server und den verbundenen Klienten.

Dadurch wird erreicht, dass nur kompatible Aufgaben an andere Edge-Geräte übertragen werden, wozu Leistungs-Informationen verwendet werden, welche den entsprechenden Aufgaben-Parametern bereitgestellt werden und von der Aufgabe selbst definiert werden, wie Prozessor- oder Speicher- oder Kommunikations-Erfordernisse zur Erledigung der jeweiligen Aufgabe.

Die Leistungs-Informationen beschreiben Eigenschaften von Aufgaben, ob die Verarbeitung einer jeweiligen Aufgabe an ein jeweiliges/spezielles Edge-Gerät verknüpft ist.

Die Verknüpfung kann beispielsweise auf lokale Erfordernisse, wie eine Verarbeitung durch einen speziellen Prozessor, insbesondere ein Grafik-Prozessor, oder eine Daten-Speicherung mit einer vorgegebenen Größe oder Zugriffsgeschwindigkeit beruhen.

In einer Weiterbildung der Erfindung ist es vorgesehen, dass der Auto-Encoder im Schritt c) einen RekonstruktionsFehler bestimmt, welcher bei der Erstellung der Verarbeitungs-Prognose herangezogen wird.

Dadurch kann auf einfache Weise ein Maß für die Prognose der Verarbeitung von Aufgaben der jeweiligen Aufgaben-Warteliste implementiert werden.

Ein Autoencoder minimiert den Rekonstruktionsfehler zwischen den Eingabe- und Ausgabedaten. Der Rekonstruktionsfehler ist die Differenz zwischen den Eingabe- und Ausgabedaten und wird mithilfe einer Verlustfunktion berechnet. Die Verlustfunktion misst, wie gut der Autoencoder die Eingabedaten rekonstruieren kann.

Die erfindungsgemäße Aufgabe wird auch durch ein System zur Aufgaben-Verteilung in einem System gelöst, umfassend einen Server, ein erstes verbundenes Edge-Gerät und zumindest ein zweites verbundenes Edge-Gerät, und das System ferner dazu eingerichtet ist, das erfindungsgemäße Verfahren auszuführen.

Die erfindungsgemäße Aufgabe wird auch durch ein Computer-Programm-Produkt mit darin gespeicherten maschinenlesbaren Anweisungen gelöst, die, wenn sie von einer Verarbeitungseinheit ausgeführt werden, diese veranlassen, das erfindungsgemäße Verfahren auszuführen.

Die Erfindung wird nachfolgend anhand eines in den beigeschlossenen Zeichnungen dargestellten Ausführungsbeispiels näher erläutert. In den Zeichnungen zeigt:
- Fig. 1: ein Ausführungsbeispiel für eine Klienten-Server-Systemarchitektur,
- Fig. 2: ein Ausführungsbeispiel für das erfindungsgemäße Verfahren,

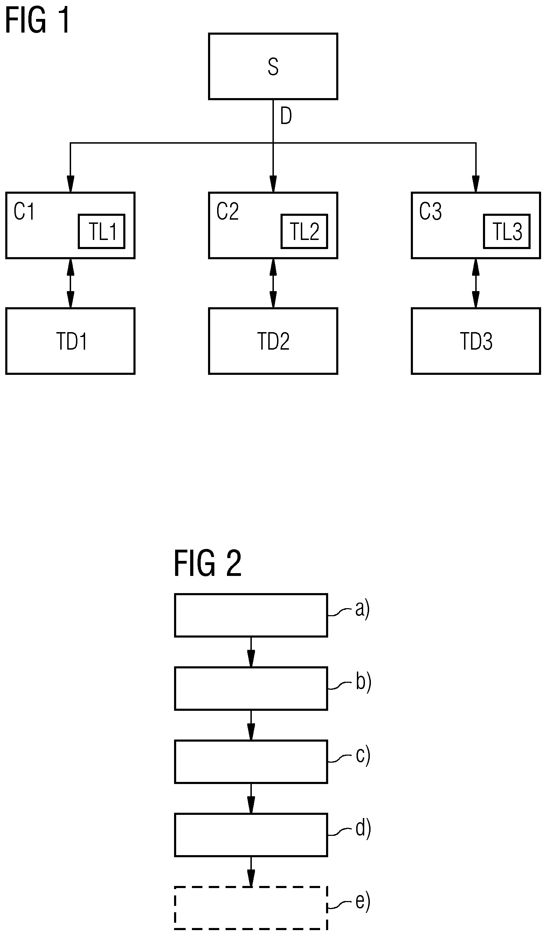

**Fig. 1** stellt ein Ausführungsbeispiel für eine Klienten-Server-Systemarchitektur dar, welches zur Aufgaben-Verteilung in einem System verwendet werden kann.

Das System umfasst einen Server S, ein erstes verbundenes Edge-Gerät C1 und zwei zweite Edge-Geräte C2, C3, welche durch ein Daten-Netzwerk D verbundenen sind.

Das System ist dazu eingerichtet ist, das erfindungsgemäße Verfahren auszuführen.

**Fig. 2** zeigt ein Ausführungsbeispiel für das erfindungsgemäße Verfahren, welches durch das zuvor beschriebene System ausgeführt wird.

Folgende Schritte werden ausgeführt:
a) Bereitstellen und Zuordnen zumindest einer ersten Aufgabe zu einer ersten Aufgaben-Warteliste TL1 des ersten Edge-Geräts C1, wobei die zumindest eine erste Aufgabe jeweilige erste Aufgaben-Parameter umfasst, welche deren Verarbeitung durch ein Edge-Gerät beschreiben,
b) Bereitstellen und Zuordnen zumindest einer zweiten Aufgabe zu einer jeweiligen zweiten Aufgaben-Warteliste TL2, TL3 der zweiten Edge-Geräte C2, C3, wobei die zumindest eine zweite Aufgabe jeweilige zweite Aufgaben-Parameter umfasst, welche deren Verarbeitung durch ein Edge-Gerät beschreiben,
c) Ermitteln der aktuellen ersten Verarbeitungskapazität des ersten Edge-Geräts C1, durch das erste Edge-Gerät C1, und Erstellen einer Verarbeitungs-Prognose für die Aufgaben in der ersten Aufgaben-Warteliste TL1 auf Basis der aktuellen ersten Verarbeitungskapazität unter Verwendung eines Auto-Encoders, und jeweiliger erster Aufgaben-Parameter, durch das erste Edge-Gerät C1,
d) Prüfen, durch das erste Edge-Gerät C1, ob die erste Verarbeitungs-Prognose innerhalb eines vorgegebenen Wertebereichs für die Verarbeitung durch das erste Edge-Gerät C1 liegt, und, wenn ja,
   Prüfen, durch das erste Edge-Gerät C1, anhand des jeweiligen zweiten Aufgaben-Parameters, ob eine Aufgabe aus der jeweiligen zweiten Aufgaben-Warteliste TL2, TL3 an das erste Edge-Gerät C1 übertragbar ist, und wenn ja, Übertragen einer Aufgabe aus der jeweiligen zweiten Aufgaben-Warteliste TL2, TL3 an die erste Aufgaben-Warteliste TL1, vorzugsweise durch das erste Edge-Gerät C1.
e) Optional, Verarbeiten der ersten Aufgaben-Warteliste TL1 durch das erste Edge-Gerät C1.

Das Bereitstellen im Schritt a) der zumindest einen ersten Aufgabe an das erste Edge-Gerät C1 und das Bereitstellen im Schritt b) der zumindest einen zweiten Aufgabe an das das zumindest eine zweite Edge-Gerät C2, C3 kann durch den Server S erfolgen.

Der erste Aufgaben-Parameter und/oder der jeweilige zweite Aufgaben-Parameter enthält Übertragungs-Informationen darüber, ob eine Aufgabe von einem Edge-Gerät auf ein anderes Edge-Gerät übertragen werden kann, insbesondere wenn an das jeweilige Edge-Gerät verbundene technische Vorrichtungen TD1-TD3 eingebunden werden müssen und/oder Daten unter verschiedenen Edge-Geräten übertragen werden müssen.

Der erste Aufgaben-Parameter und/oder der jeweilige zweite Aufgaben-Parameter enthält Leistungs-Informationen über die Verarbeitung einer Aufgabe von einem Edge-Gerät, insbesondere Prozessor-Informationen und/oder Speicher-Informationen und/oder Netzwerk-Informationen über das Netzwerk zwischen Server S und den verbundenen Klienten C1-C3.

Der Auto-Encoder im Schritt c) bestimmt einen Rekonstruktions-Fehler, welcher zur Vorhersage zukünftiger Überlastungsbedingungen auf der Grundlage von Metriken wie CPU-, Speicher- und (eingehender) Netzwerkauslastung verwendet werden kann.

Der Auto-Encoder wird basierend auf normalen und erwarteten Bedingungen eines Edge-Geräts trainiert.

Der Auto-Encoder wird zur Laufzeit (Inferenzzeit) verwendet, um den Rekonstruktionsfehler basierend auf den Metriken zu berechnen.

Es wird somit eine Prognose für den Rekonstruktionsfehler berechnet.

Erreicht der Rekonstruktionsfehler beispielsweise einen Schwellenwert von der 3-fachen Standardabweichung, wird eine Aufgabe aus der jeweiligen zweiten Aufgaben-Warteliste TL2, TL3 an die erste Aufgaben-Warteliste TL1 übertragen, bevor eine Überlastung eintritt.

Die Verarbeitungs-Prognose kann beispielsweise anderen Edge-Geräten signalisiert werden. Dazu können Beobachterknoten, also Edge-Geräte, welche Aufgaben von anderen Edge-Geräten übernehmen wollen, beispielsweise um Hardware-Ressourcen von Edge-Geräten mit ausreichender Kapazität, das Anbieten von anderen Edge-Geräten dort abonnieren.

Sogenannte "Industrial Edge Management"-Metriken anderer Knoten können eingesetzt werden, welche den Status von Prozessoren, Speichern und (eingehendem) Netzwerkverkehr überwachen.

Ein Trend steigender Metriken ist ein Indikator für bevorstehende Überlastungsbedingungen. Anstatt sich nur auf die aktuelle Last gemäß der Größe der Aufgaben-Warteliste zu konzentrieren, können andere Edge-Geräte Vorhersagemodelle anwenden, um zukünftige Überlastungssituationen zu prognostizieren.

### Bezugszeichenliste:

- C1-C3: Klient, Edge-Gerät
- D: Datenverbindung
- S: Server
- TL1-TL3: Aufgaben-Warteliste

## Patentansprüche

1. Computer-Implementiertes Verfahren zur Aufgaben-Verteilung in einem System, umfassend einen Server (S), ein erstes verbundenes Edge-Gerät (C1) und zumindest ein zweites verbundenes Edge-Gerät (C2, C3), wobei folgende Schritte ausgeführt werden:
a) Bereitstellen und Zuordnen zumindest einer ersten Aufgabe zu einer ersten Aufgaben-Warteliste (TL1) des ersten Edge-Geräts (C1), wobei die zumindest eine erste Aufgabe jeweilige erste Aufgaben-Parameter umfasst, welche deren Verarbeitung durch ein Edge-Gerät beschreiben,
b) Bereitstellen und Zuordnen zumindest einer zweiten Aufgabe zu einer jeweiligen zweiten Aufgaben-Warteliste (TL2, TL3) des zumindest einen zweiten Edge-Geräts (C2, C3), wobei die zumindest eine zweite Aufgabe jeweilige zweite Aufgaben-Parameter umfasst, welche deren Verarbeitung durch ein Edge-Gerät beschreiben,
c) Ermitteln der aktuellen ersten Verarbeitungskapazität des ersten Edge-Geräts (C1), durch das erste Edge-Gerät (C1), und Erstellen einer Verarbeitungs-Prognose für die Aufgaben in der ersten Aufgaben-Warteliste (TL1) auf Basis der aktuellen ersten Verarbeitungskapazität unter Verwendung eines Auto-Encoders, und jeweiliger erster Aufgaben-Parameter, durch das erste Edge-Gerät (C1),
d) Prüfen, durch das erste Edge-Gerät (C1), ob die erste Verarbeitungs-Prognose innerhalb eines vorgegebenen Wertebereichs für die Verarbeitung durch das erste Edge-Gerät (C1) liegt, und, wenn ja,
Prüfen, durch das erste Edge-Gerät (C1), anhand des jeweiligen zweiten Aufgaben-Parameters, ob eine Aufgabe aus der jeweiligen zweiten Aufgaben-Warteliste (TL2, TL3) an das erste Edge-Gerät (C1) übertragbar ist, und wenn ja,
Übertragen einer Aufgabe aus der jeweiligen zweiten Aufgaben-Warteliste (TL2, TL3) an die erste Aufgaben-Warteliste (TL1), vorzugsweise durch das erste Edge-Gerät (C1).

2. Verfahren nach dem vorhergehenden Anspruch, wobei ferner folgender Schritt ausgeführt wird:
e) Verarbeiten der ersten Aufgaben-Warteliste (TL1) durch das erste Edge-Gerät (C1).

3. Verfahren nach einem der vorhergehenden Ansprüche, wobei das Bereitstellen im Schritt a) der zumindest einen ersten Aufgabe an das erste Edge-Gerät (C1) und das Bereitstellen im Schritt b) der zumindest einen zweiten Aufgabe an das das zumindest eine zweite Edge-Gerät (C2, C3) durch den Server (S) erfolgt.

4. Verfahren nach einem der vorhergehenden Ansprüche, wobei der erste Aufgaben-Parameter und/oder der jeweilige zweite Aufgaben-Parameter Übertragungs-Informationen darüber enthält, ob eine Aufgabe von einem Edge-Gerät auf ein anderes Edge-Gerät übertragen werden kann, insbesondere wenn an das jeweilige Edge-Gerät verbundene technische Vorrichtungen (TD1-TD3) eingebunden werden müssen und/oder Daten unter verschiedenen Edge-Geräten übertragen werden müssen.

5. Verfahren nach einem der vorhergehenden Ansprüche, wobei der erste Aufgaben-Parameter und/oder der jeweilige zweite Aufgaben-Parameter Leistungs-Informationen über die Verarbeitung einer Aufgabe von einem Edge-Gerät enthält, insbesondere Prozessor-Informationen und/oder Speicher-Informationen und/oder Netzwerk-Informationen über das Netzwerk zwischen Server (S) und den verbundenen Klienten (C1-C3).

6. Verfahren nach einem der vorhergehenden Ansprüche, wobei der Auto-Encoder im Schritt c) einen RekonstruktionsFehler bestimmt, welcher bei der Erstellung der Verarbeitungs-Prognose herangezogen wird.

7. System zur Aufgaben-Verteilung in einem System, umfassend einen Server (S), ein erstes verbundenes Edge-Gerät (C1) und zumindest ein zweites verbundenes Edge-Gerät (C2, C3), und das System ferner dazu eingerichtet ist, das Verfahren nach einem der vorhergehenden Ansprüche auszuführen.

8. Computer-Programm-Produkt mit darin gespeicherten maschinenlesbaren Anweisungen, die, wenn sie von einer Verarbeitungseinheit ausgeführt werden, diese veranlassen, das Verfahren nach einem der vorhergehenden Ansprüche auszuführen.
